# DEMANDE DE BREVET EUROPEEN

(11) **EP 2 879 006 A1**
(43) Date de publication de la demande: **03.06.2015**
(21) Numéro de dépôt: 13195187.3
(22) Date de dépôt: 29.11.2013
(51) Int. Cl.: G04B 47/04, G04B 45/00, G03B 25/00

(54) **Pièce d'horlogerie à animation**

(71) Demandeur: Christophe Claret Engineering S.A., 2400 Le Locle (CH)
(72) Inventeur: Claret, Christophe, 2025 Chez-le-Bart (CH); Auteri, Giuseppe, 2300 La Chaux-de-Fonds (CH); Perrot-Minnot, Florent, 25500 Les Fins (FR)
(74) Mandataire: GLN SA

(57) **Abrégé**

Pièce d'horlogerie (1) à animation comprenant :
- un mouvement d'horlogerie (3) ;
- un dispositif d'affichage du temps (5) agencé pour être entraîné par le mouvement d'horlogerie (3) ;
- un dispositif d'animation (7).

Selon l'invention, le dispositif d'animation (7) comprend un système de praxinoscope (9) comprenant un rotor (11) agencé pour être entraîné en rotation par une source d'énergie (67).

## Description

### Domaine technique

La présente invention se rapporte au domaine de l'horlogerie. Elle concerne, plus particulièrement, une pièce d'horlogerie comportant un dispositif d'animation.

### Etat de la technique

On connaît de l'art antérieur plusieurs pièces d'horlogerie présentant divers systèmes d'affichage d'une animation. À titre d'exemple, le document EP 2 527 930 divulgue une montre mécanique comprenant un disque d'animation soumis à une rotation saccadée afin de laisser apparaître, à travers un guichet pratiqué dans le cadran, une animation formée par une séquence d'images que présente le disque.

Le document JP 61-239190 divulgue une montre similaire à celle du EP 2 527 930 susmentionné, dans lequel le disque est déplacé au moyen d'un moteur pas-à-pas.

Le document US 2,891,378 divulgue encore une montre mécanique similaire à celle du EP 2 527 930 susmentionné, dans laquelle l'animation est formée par des séquences d'images que portent deux disques disposés tangentiellement, chaque image complète étant formée par la réunion de l'une des images de chaque disque.

Cependant, tous les systèmes mentionnés ci-dessus, bien que relativement minces et compacts, présentent un ou plusieurs disques soumis à une rotation saccadée, ce qui est nécessaire pour laisser apparaître l'animation à travers d'un guichet. De tels mouvements saccadés entraînent une usure des composants du mécanisme d'entraînement, des pertes d'énergie, et du bruit désagréable au cours de l'animation.

Le but de l'invention est par conséquent de proposer une pièce d'horlogerie modulaire dans laquelle les défauts susmentionnés sont au moins partiellement surmontés.

### Divulguation de l'invention

De façon plus précise, l'invention concerne une pièce d'horlogerie à animation comprenant un mouvement d'horlogerie, un dispositif d'affichage du temps agencé pour être entraîné par le mouvement d'horlogerie, et un dispositif d'animation. Selon l'invention, le dispositif d'animation comprend un système de praxinoscope comprenant un rotor, ce dernier étant agencé pour être entraîné en rotation par une source d'énergie.

En termes généraux, un praxinoscope est un dispositif d'animation comprenant une partie centrale présentant une pluralité de miroirs, typiquement plats, agencés afin de former une paroi généralement angulaire et facettée. En face de, et à distance de ces miroirs se trouve une pluralité d'images séquentielles agencées sur une paroi substantiellement cylindrique, facettée ou non, chacun des images se situant en face d'un miroir correspondant. Lors d'une rotation du praxinoscope, les images séquentielles sont animées, reflétées dans les miroirs.

Un praxinoscope tournant de manière continue, c'est-à-dire de manière non saccadée, son mécanisme d'entraînement peut être substantiellement plus simple que celui des systèmes de l'art antérieur, génère comparativement moins de bruit, et perd comparativement moins d'énergie.

De manière avantageuse, le rotor comprend une partie centrale présentant une pluralité de miroirs agencés en cercle et inclinés par rapport à un axe de rotation du rotor, une partie périphérique présentant une pluralité d'images, chaque image étant en face d'un miroir correspondant, et un pont reliant la partie centrale à la partie périphérique de telle sorte que la partie centrale et la partie périphérique sont mutuellement solidaires en rotation. De préférence, le pont est transparent, le dispositif d'affichage de temps étant situé de telle sorte qu'il est au moins partiellement visible à travers le pont. Par conséquent, une construction compacte peut être proposée, par exemple avec l'axe de rotation du rotor coaxial au dispositif d'affichage.

De manière avantageuse, ladite source d'énergie est indépendante de celle du mouvement d'horlogerie. Le dispositif d'animation est ainsi indépendant du mouvement de base, et ne peut pas nuire à sa fonction. De plus, une source d'énergie indépendante permet une construction modulaire pouvant être intégrée dans n'importe quel mouvement existant.

De manière avantageuse, le système de praxinoscope comprend un sautoir destiné à coopérer avec une came de positionnement disposée sur le rotor et agencée pour positionner le rotor dans l'une d'une pluralité de positions angulaires prédéterminées lorsque le rotor n'est pas en rotation. Par conséquent, une rotation non désirée du rotor peut être évitée.

De manière avantageuse, la source d'énergie est un ressort moteur en liaison cinématique avec une denture périphérique que comporte le rotor, de préférence par l'intermédiaire d'un rouage multiplicateur.

De manière avantageuse, le rotor est adapté pour être entraîné par la source d'énergie suite à une action d'un utilisateur sur un organe d'actionnement manuel, par exemple un levier présentant une crémaillère actionnée au moyen d'un bouton poussoir, une tirette, ou similaire.

De manière avantageuse, le système de praxinoscope comprend un dispositif d'actionnement comprenant :
- une bascule de déclenchement adaptée pour bloquer la rotation du rotor dans une position de blocage de ladite bascule et pour libérer la rotation du rotor dans une position de déclenchement de ladite bascule ;
- un mobile d'actionnement adapté pour être pivoté d'un angle prédéterminé en réponse à ladite action de l'utilisateur, le mobile d'actionnement étant adapté pour emmagasiner une quantité d'énergie prédéterminée dans la source d'énergie, le mobile d'actionnement comprenant une came d'actionnement adaptée pour pivoter la bascule de déclenchement entre ladite position de blocage et ladite position de déclenchement lorsque ladite quantité d'énergie prédéterminée a été emmagasinée dans la source d'énergie. Par conséquent, l'animation n'est déclenchée qu'après que ladite quantité d'énergie prédéterminée a été stocké dans la source d'énergie, afin d'assurer qu'il y aura suffisamment d'énergie pour effectuer l'animation.

De manière avantageuse, la bascule de déclenchement est adaptée pour soulever ledit sautoir lorsque ladite bascule de déclenchement se trouve dans ladite position de déclenchement. Par conséquent, le sautoir peut positionner le rotor en position de repos, et le libérer lors du déclenchement, évitant ainsi que le sautoir nuise à la rotation de rotor.

De manière avantageuse, le sautoir est adapté pour exercer une force de rappel sur la bascule de déclenchement tendant à pousser la bascule de déclenchement vers ladite position de blocage. Aucun ressort supplémentaire pour la bascule de déclenchement n'est ainsi nécessaire.

De manière avantageuse, le dispositif d'actionnement comprend en outre une came de blocage en liaison cinématique avec la source d'énergie et le rotor et agencé pour bloquer, au moins indirectement, la rotation du rotor, la came de blocage étant adaptée à être bloquée en rotation dans une position prédéterminée par la bascule de déclenchement lorsque la bascule de déclenchement se trouve dans ladite position de blocage. De préférence, la came de blocage est adaptée pour être rebloquée par la bascule de déclenchement lorsque ladite quantité d'énergie prédéterminée a été consommée, ce qui peut être réalisé en choisissant des rapports d'engrenages appropriés.

De manière avantageuse, le mobile d'actionnement comprend une came flexible de sécurité, la came de sécurité étant adaptée pour ne pas empêcher la bascule de déclenchement de passer entre la position de blocage et la position de déclenchement, et pour empêcher la bascule de déclenchement de revenir dans la position de blocage avant que la came de blocage ait tourné d'un angle prédéterminé. Par conséquent, si l'utilisateur relâche l'organe d'actionnement manuel de manière trop rapide, un reblocage immédiat de la came de blocage est évité.

De manière avantageuse, le rotor est pivoté sur un roulement à billes, afin de réduire des frottements.

La pièce d'horlogerie peut avantageusement être une montre bracelet ou une montre de poche.

### Brève description des dessins

D'autres détails de l'invention apparaîtront plus clairement à la lecture de la description qui suit, faite en référence aux dessins annexés dans lesquels :
- Fig. 1 est une représentation schématique d'une pièce d'horlogerie selon l'invention ;
- Fig. 2 est une représentation en perspective du dispositif d'animation, vue du dessus ;
- Fig. 3 est une représentation en perspective du dispositif d'animation, vue du dessous ;
- Fig. 4 est une représentation en perspective éclatée d'une portion du dispositif d'actionnement du dispositif d'animation,
- Fig. 5 est une vue en plan du dispositif d'animation dans sa position de repos ;
- Fig. 6 est une vue en plan du dispositif d'animation juste avant le déclenchement de l'animation ;
- Fig. 7 est une vue en plan du dispositif d'animation au moment du déclenchement de l'animation ;
- Fig. 8 est une vue en plan du dispositif d'animation juste après le déclenchement de l'animation ;
- Fig. 9 est une vue en plan du dispositif d'animation pendant le cours de l'animation ;
- Fig. 10 est une vue en plan d'un mouvement d'horlogerie comportant ledit dispositif d'animation ;
- Fig. 11 est une vue en perspective du mouvement d'horlogerie de la figure 10 ;
- Fig. 12 est une vue en coupe du mouvement d'horlogerie de la figure 10 selon l'axe A-A.

### Modes de réalisation de l'invention

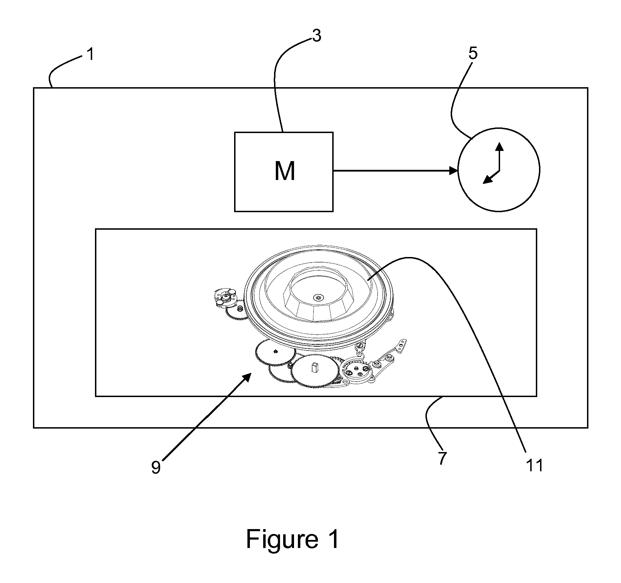

La figure 1 illustre schématiquement, et de manière générale, une pièce d'horlogerie 1 selon l'invention. Cette pièce d'horlogerie est, par exemple, une montre bracelet, une montre de poche, une pendule, ou similaire. La pièce d'horlogerie 1 comprend, de manière standard, un mouvement d'horlogerie 3, pourvu de sa propre source d'énergie, qui entraîne un dispositif d'affichage 5 de type quelconque.

La pièce d'horlogerie 1 comprend en outre un dispositif d'animation 7. Selon l'invention, le dispositif d'animation comprend un système de praxinoscope 9, qui comprend un rotor 11 entraîné par une source d'énergie, comme cela sera décrit plus en détails ci-dessous.

Selon la forme la plus générale de l'invention, le mouvement d'horlogerie peut être de n'importe quel genre, par exemple mécanique, électromécanique, ou numérique, et le rotor 11 du système de praxinoscope 9 peut partager une source d'énergie avec le mouvement d'horlogerie 3, ou alternativement le mouvement d'horlogerie 3 et le système de praxinoscope 9 peuvent présenter chacun sa propre source d'énergie indépendante. Par ailleurs, il est à noter que, de manière générale, la ou les source(s) d'énergie peuvent être électrique(s) ou mécanique(s), ou une combinaison d'une source d'énergie mécanique avec une source d'énergie électrique.

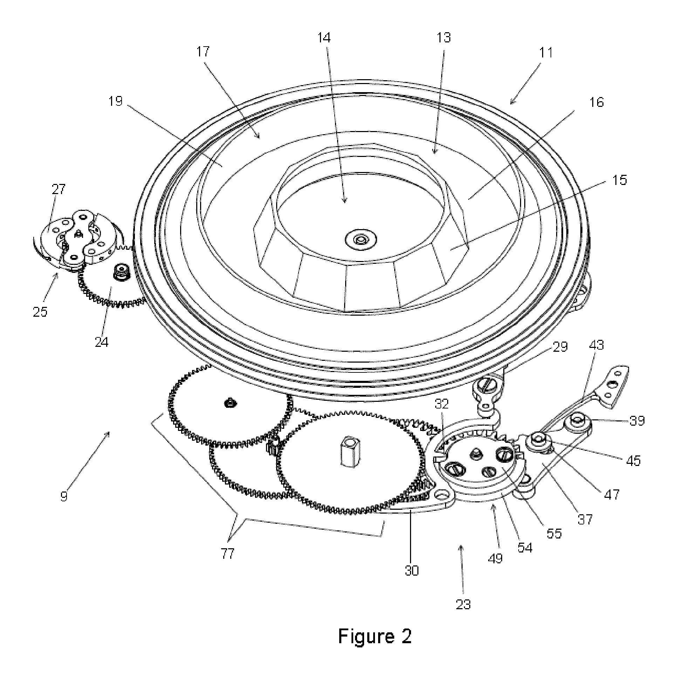

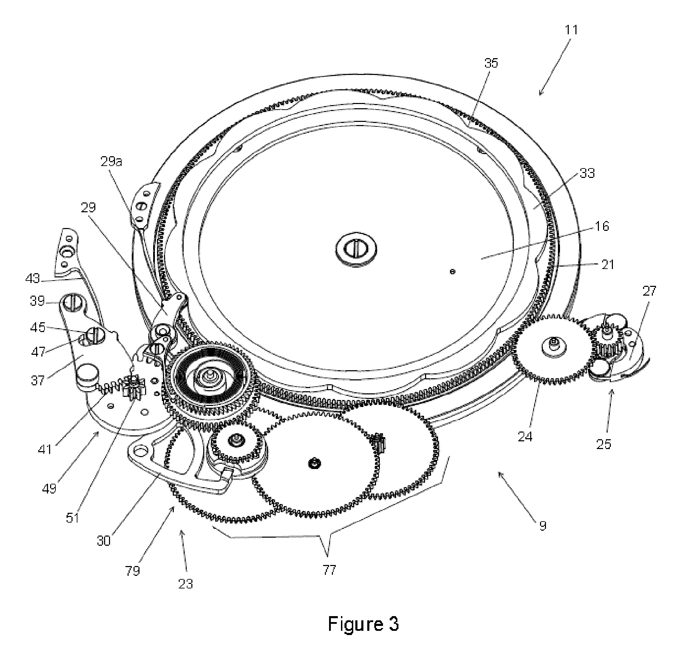

Les figures 2 et 3 illustrent un mode de réalisation particulier d'un système de praxinoscope 9 pour une pièce d'horlogerie selon l'invention, vue de dessus sur la figure 2, c'est-à-dire du côté où l'animation est visible, et vue de dessous sur la figure 3, c'est-à-dire du côté fond, en position de repos. Ce mode de réalisation du système de praxinoscope 9 est présenté sous forme entièrement mécanique, qui présente sa propre source d'énergie mécanique, c'est-à-dire son propre ressort moteur. Le système de praxinoscope 9 est construit de manière modulaire, indépendamment du mouvement d'horlogerie. Il est donc susceptible d'être intégré dans n'importe quelle pièce d'horlogerie.

Le système de praxinoscope 9 comprend un rotor 11, destiné à être pivoté sur un élément du bâti de la pièce d'horlogerie 1 au moyen d'un roulement à billes (non illustré), afin de minimiser les frottements lors de la rotation du rotor 11.

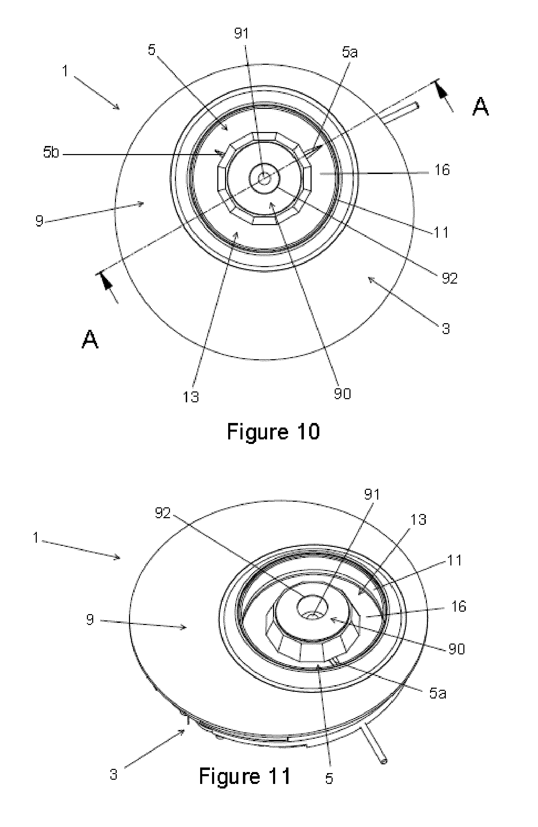

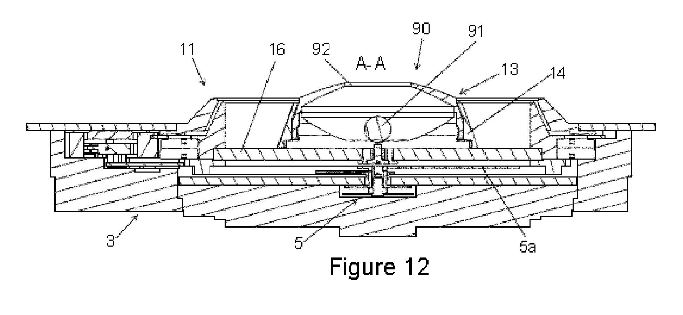

Le rotor 11 comprend une partie centrale 13 présentant une pluralité de miroirs 15 agencés en cercle et légèrement inclinés par rapport à l'axe de rotation du rotor 11. Dans le cas d'espèce, la partie centrale 13 présente douze miroirs 15, mais le nombre de miroirs peut être choisi selon les besoins de l'horloger. Le rotor 11 comprend en outre une partie périphérique 17 présentant une paroi intérieure 19 pourvue d'une pluralité d'images (non représentées), chaque image étant positionnée en face d'un miroir 15 correspondant. La partie périphérique 17 est liée à la partie centrale 13 par un pont 16, qui est avantageusement transparent (par exemple en saphir, verre, plastique transparent ...) afin de laisser apparaître des moyens d'affichage (voir les figures 10 à 12), tels que des aiguilles 5a, 5b, situés sous le rotor 11. Le principe d'animation d'un praxinoscope est bien connu, et n'a pas besoin d'être décrit plus en détails.

La partie centrale 13 présente un logement 14 dans lequel peut être logé par exemple un élément décoratif tel qu'un bijou, un affichage quelconque, un assemblage de miroirs comprenant deux miroirs concaves opposés définissant une cavité à l'intérieur de laquelle se trouve un objet, l'un des miroirs concaves étant percé d'une ouverture laissant apparaître ledit objet (voir ci-dessous), ou similaire.

Le rotor 11 comprend une denture périphérique 21 qui sert à l'entraînement du rotor 11 par un dispositif d'actionnement 23. La denture périphérique 21 est également en liaison cinématique, via un mobile intermédiaire 24, avec un régulateur de vitesse 25, ce dernier comprenant un volant d'inertie 27. Le régulateur de vitesse 25 peut être de n'importe quel type, et pourrait alternativement être agencé comme sous-élément du dispositif d'actionnement 23.

Lorsque le rotor 11 ne tourne pas, il est positionné par un sautoir 29 pourvu d'un ressort de sautoir 29a et d'un rouleau 31 sur l'une de ses extrémités. Le sautoir 29 est déplaçable entre une position d'arrêt, dans laquelle le rouleau 31 coopère avec une came de positionnement 33 disposée périphériquement autour du rotor 11, et qui présente une pluralité d'encoches 35. Ces encoches 35 sont agencées de telle sorte que le rotor 11 est arrêté dans l'une d'une pluralité de positions angulaires prédéterminées, par exemple avec l'un des miroirs parallèle à l'axe 9h-3h de la pièce d'horlogerie.

Lors de l'actionnement du mécanisme de praxinoscope, le sautoir 29 est soulevé par un bascule de déclenchement 30 contre l'effet du ressort de sautoir 29a, de telle sorte que le rouleau 31 est éloigné de la came de positionnement 33, et que le rotor 11 peut tourner librement, comme cela sera décrit plus en détails par la suite. Le ressort de sautoir 29a sert par conséquent aussi à pousser la bascule de déclenchement 30, mais il est également possible d'utiliser un ressort supplémentaire dans ce même but.

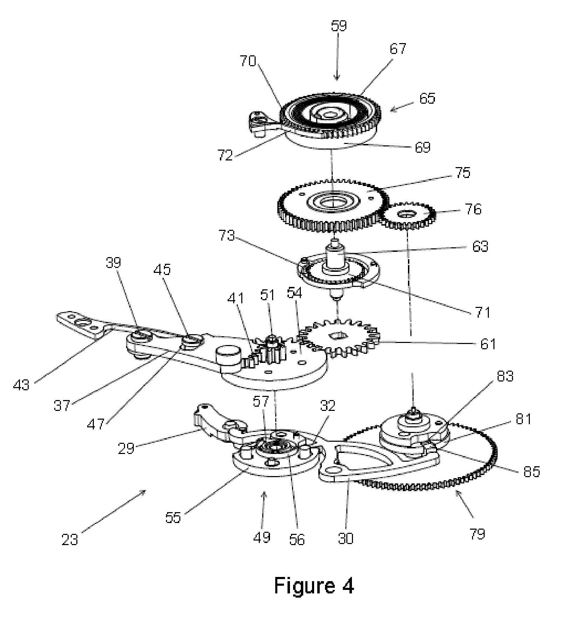

La figure 4 illustre une portion du dispositif d'actionnement 23 en vue éclatée. Le dispositif d'actionnement comprend un organe d'actionnement manuel 37, ici représenté sous forme de levier poussoir pivoté en 39 sur un élément du bâti de la pièce d'horlogerie 1 (non représenté) et comprenant une crémaillère 41 à son extrémité libre. L'organe d'actionnement manuel 37 est poussé vers sa position de repos au moyen d'un ressort 43, et sa trajectoire est limitée par un plot 45 solidaire d'un élément du bâti, se situant à l'intérieur d'une fente 47 pratiquée dans organe d'actionnement manuel 37. De manière alternative, l'organe d'actionnement manuel 37 pourrait être constitué par exemple par une tirette.

L'organe d'actionnement manuel 37 interagit avec un mobile d'actionnement 49 pour démarrer le fonctionnement du dispositif de praxinoscope 9.

Le mobile d'actionnement 49 comprend un pignon 51 engrenant avec la crémaillère 41, une came d'actionnement 55, une roue d'entraînement 54, et une came rétractable de sécurité 57 en sandwich entre la roue d'entraînement 54 et la came actionnement 55. La came rétractable de sécurité 57 est liée à la came d'actionnement 55 par l'intermédiaire d'un ressort 56. La came d'actionnement 55 ainsi que la came rétractable de sécurité 57 interagissent avec un premier bec 32 que comporte la bascule de déclenchement 30, comme sera décrit plus en détails ci-dessous. La roue d'entraînement 54 présente dans le cas illustré une denture partielle, mais il est également possible que la roue d'entraînement 54 présente une denture complète.

La roue d'entraînement 54 engrène avec une roue 61 d'un ensemble moteur 59. L'ensemble moteur 59 comprend un barillet 65 dans lequel est logé un ressort moteur 67, dont l'extrémité extérieure duquel est en liaison avec un tambour 69, de manière conventionnelle. Le tambour 69 est pourvu d'une denture breguet 70 formant un rochet qui interagit avec un cliquet de tambour 72, ce qui évite que le tambour 69 puisse se désarmer.

L'extrémité intérieure du ressort moteur 67 est liée à un axe de barillet 63, qui est solidaire en rotation avec la roue 61.

L'axe de barillet 63 est solidaire en rotation avec une roue à rochet 71, qui est positionnée par un cliquet 73, ce dernier étant solidaire en rotation avec une roue de barillet (voir ci-dessous). A chaque activation complète de l'organe d'actionnement manuel 37, une quantité d'énergie prédéterminée est stockée dans le ressort moteur 67 par un pivotement de l'axe de barillet 63 selon un angle prédéterminé. Cette quantité d'énergie prédéterminée représente l'énergie nécessaire pour effectuer une fois le cours de l'animation, qui pourrait représenter un ou plusieurs tours du rotor 11. Par exemple, si un demi-tour du ressort moteur 67 est utilisé pour effectuer l'animation, l'axe de barillet tourne d'un demi-tour lors de l'actionnement de l'animation.

Dans le mode de réalisation illustré, si l'utilisateur actionne l'organe d'actionnement manuel 37 de manière incomplète, la roue à rochet 71 n'ayant pas été tournée suffisamment pour stocker ladite quantité d'énergie prédéterminée dans le ressort moteur 67, l'animation n'est pas déclenchée (voir ci-dessous) et l'organe d'actionnement manuel 37 reste dans sa position partiellement actionnée. Par conséquent, une surcharge du ressort de barillet 67 par des pressions successives sur l'organe d'actionnement manuel 37 est évitée.

Le cliquet de la roue à rochet 71 est solidaire en rotation avec une roue 75. Cette roue 75 est en liaison cinématique avec un rouage multiplicateur 77 (voir les figures 2 et 3), et engrène via une roue intermédiaire 76 avec un premier mobile 79 du rouage multiplicateur 77.

Le premier mobile 79 du rouage multiplicateur 77 comprend une came de blocage 81 qui comporte une encoche 83 qui interagit avec un bec de blocage 85 que comporte la bascule de déclenchement 30. Lorsque le bec de blocage 85 se trouve dans l'encoche 83, le premier mobile 79 est bloqué et ne peut pas tourner. En soulevant la bascule de déclenchement 30, le bec de blocage 85 sort de l'encoche 83, et le premier mobile 79 est libre de tourner sous l'effet du ressort moteur 67, entraînant ainsi le rotor 11 en rotation par l'intermédiaire du rouage multiplicateur 77.

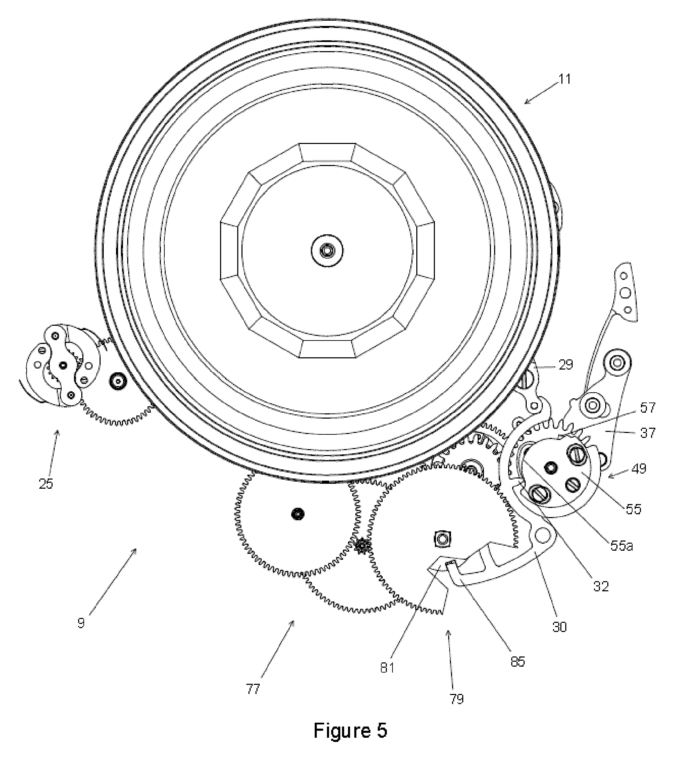

La séquence de fonctionnement du système de praxinoscope 9 sera maintenant décrite en référence aux figures 5 à 10. Afin d'éviter une surcharge de ces figures, seuls les signes de référence des composants décrits et visibles ont été représentés ici.

La figure 5 illustre le système de praxinoscope 9 dans son position de repos. Dans cette position, l'organe d'actionnement manuel 37 se trouve dans sa position de repos, et la came d'actionnement 55 se trouve dans sa position angulaire de repos, tournée complètement dans le sens horaire. Le premier bec 32 de la bascule d'actionnement 30 se trouve en contact avec une partie du rayon inférieur 55a de la came d'actionnement 55, et la bascule d'actionnement 30 se trouve dans sa position de repos. Par conséquent, le sautoir 29 interagit avec une encoche 35 (non visible sur la figure 5) afin de positionner le rotor 11, et le bec de blocage 85 de la bascule d'actionnement 30 se trouve dans l'encoche 83 de la came de blocage 81. Le rouage multiplicateur 77 est ainsi bloqué. On note que l'extrémité de la came rétractable de sécurité 57 est visible en protrusion vers la fin de la partie du rayon inférieur 55a de la came d'actionnement 55, considéré dans le sens horaire.

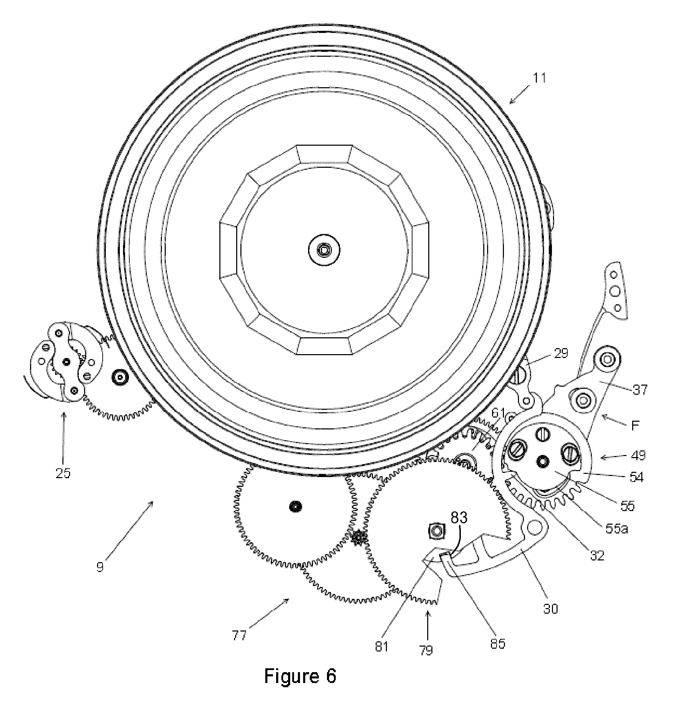

La figure 6 illustre le système de praxinoscope 9 lors d'une pression incomplète sur l'organe d'actionnement manuel 37, pas encore suffisante pour emmagasiner ladite quantité d'énergie prédéterminée dans le ressort moteur 67. En réponse à l'application d'une force F sur l'organe d'actionnement manuel 37, le mobile d'actionnement 49 est pivoté dans le sens anti horaire (en référence à la vue de la figure 6). Le premier bec 32 de la bascule d'actionnement 30 glisse le long de la partie du rayon inférieur 55a de la came d'actionnement 55, tandis que la roue 61 de l'ensemble moteur 59 est pivotée dans le sens horaire par la roue d'entraînement 54 du mobile d'actionnement 49, enroulant ainsi le ressort moteur 67. Ce faisant, la bascule d'actionnement 30 demeure dans sa position de repos. On note par ailleurs que le premier bec 32 pousse l'extrémité de la came rétractable de sécurité 57 à pivoter et à s'escamoter sous la came d'actionnement 55.

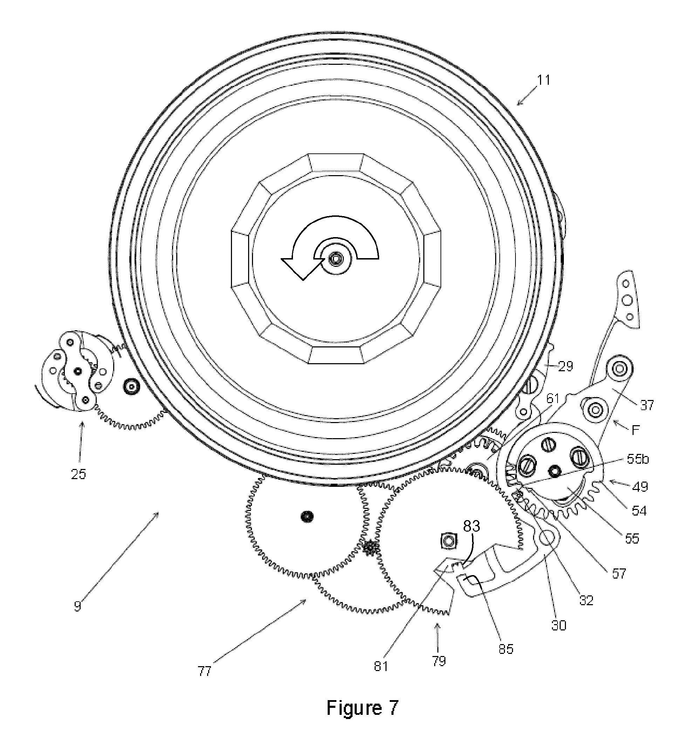

La figure 7 illustre le système de praxinoscope 9 lorsque l'organe d'actionnement manuel 37 a été complètement poussé. La transition entre la partie du rayon de rayon inférieur 55a et une partie du rayon supérieur 55b de la came d'actionnement 55 fait pivoter la bascule d'actionnement 30 dans le sens anti horaire, tandis que la quantité d'énergie prédéterminée a été emmagasinée dans le ressort moteur 67. La came rétractable de sécurité 57 est libérée, et reprend sa position de repos.

Simultanément, le bec de blocage 85 quitte l'encoche 83 que comporte la came de blocage 81, libérant ainsi le rouage multiplicateur 77, qui est donc libre de tourner sous l'effet du ressort moteur 67 par l'intermédiaire de la roue 75. De plus, la bascule d'actionnement 30 soulève le sautoir 29, qui libère le rotor 11. Ce faisant, le rouage multiplicateur 77 est libéré exclusivement lorsque ladite quantité d'énergie prédéterminée a été emmagasinée dans le ressort moteur 67, évitant ainsi que le ressort moteur 67 soit progressivement surchargé ou insuffisamment chargé après plusieurs activations du système de praxinoscope 9.

Suite à la libération du rouage multiplicateur 77, le rotor 11 tourne dans le sens anti-horaire, et affiche l'animation. La vitesse du rotor 11 est réglée par le régulateur de vitesse 25 de manière connue.

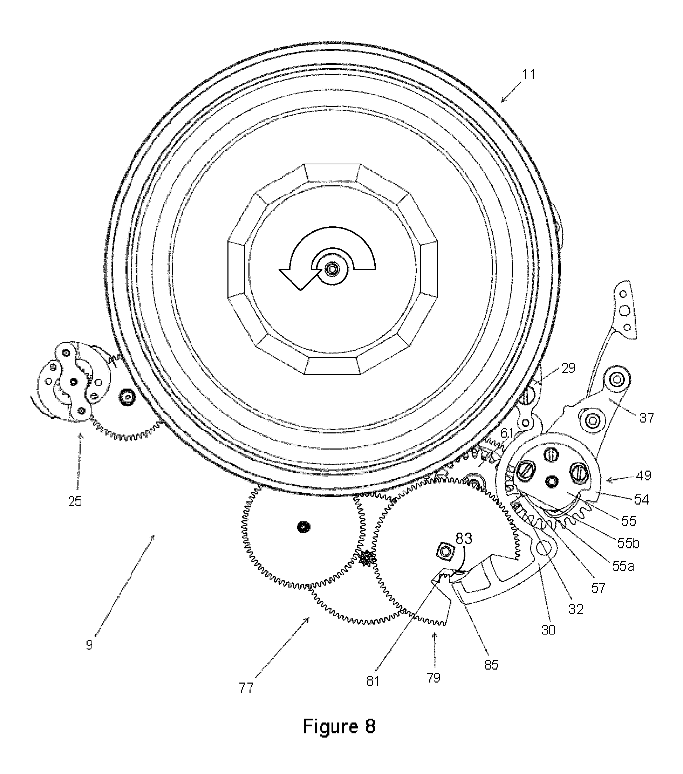

La figure 8 illustre le système de praxinoscope 9 quelques moments après le déclenchement de l'animation, l'organe d'actionnement manuel 37 ayant été relâché.

Le premier mobile 79 du rouage multiplicateur 77 a tourné légèrement dans le sens horaire, éloignant angulairement l'encoche 83 du bec de blocage 85. Pour éviter que le bec de blocage 85 puisse retomber immédiatement dans l'encoche 83, le premier bec 32 de la bascule de déclenchement 30 entre en contact avec la came rétractable de sécurité 57, qui fait saillie de la came d'actionnement 55 adjacente à la partie du rayon supérieur 55b à un rayon intermédiaire entre la partie du rayon inférieur 55a et la partie du rayon supérieur 55b. On évite ainsi que le bec de blocage 85 puisse rentrer en contact avec la came de blocage 81 avant que l'encoche 83 ait été déplacée d'un angle suffisant pour éviter que le bec de blocage 81 puisse s'y rengager, ce qui aurait pour effet de bloquer le déclenchement de l'animation tandis que le ressort moteur 67 a été enroulé.

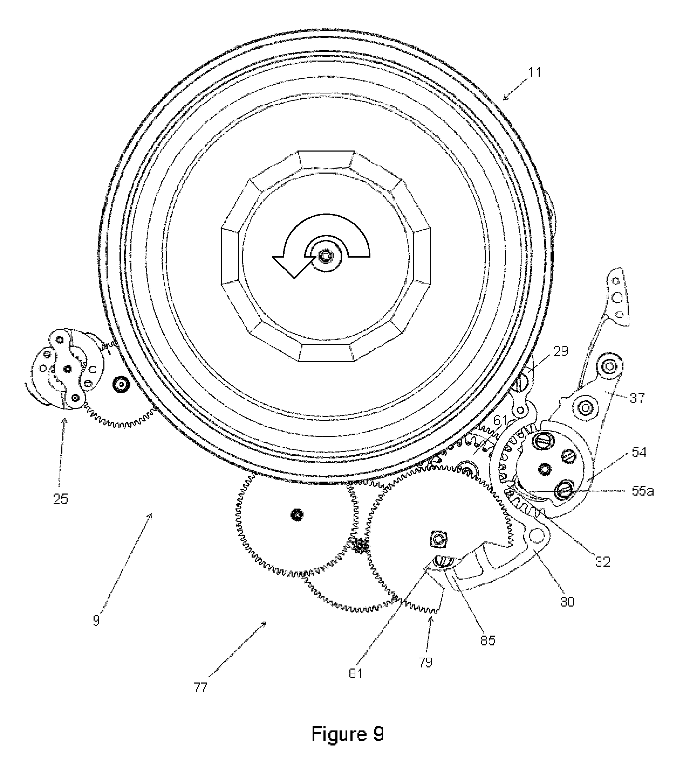

La figure 9 illustre le système de praxinoscope 9 au cours de l'animation. Le rotor 11 continue à tourner sous l'effet du ressort moteur 67. L'organe d'actionnement manuel 37 revient vers sa position de repos sous l'effet de son ressort 43 en combinaison avec l'effet de la roue 61, qui est entraînée dans le sens anti horaire (par rapport à la vue de fig. 9) par la rotation de l'axe de barillet menée par l'interaction du cliquet 73 avec la roue à rochet 71, ce dernier étant solidaire en rotation dans ce sens de rotation avec la roue 75 qui est en train de tourner dans le même sens. Le premier bec 32 de la bascule d'actionnement 30 se trouve en face de la partie de rayon inférieur 55a de la came d'actionnement 55, mais ne peut pas rentrer en contact avec cette dernière grâce au bec de blocage 85 de la bascule d'actionnement 30, qui se trouve en contact avec la surface de la came de blocage 81 sous l'effet du ressort de sautoir 29a (voir la figure 3), tandis que la came de blocage 81 continue à tourner.

Lorsque la came de blocage 81 a effectué un tour complet, le bec de blocage 85 de la bascule d'actionnement 30 retombe dans l'encoche 83, bloquant ainsi le rouage multiplicateur 77. Par conséquent, la bascule d'actionnement 30 pivote dans le sens horaire jusqu'à ce que sa première protubérance 32 rentre en contact avec la partie du rayon inférieur 55a de la came d'actionnement 55. Simultanément, la bascule d'actionnement 30 remet le sautoir 29 dans sa position d'arrêt, positionnant ainsi le rotor 11 comme décrit ci-dessus. Suite à ces actions, le système de praxinoscope 9 se retrouve dans sa position de repos comme illustrée dans la figure 5. Les rapports d'engrenage sont agencés de telle sorte que la came de blocage 81 a fait un tour complet lorsque ladite quantité d'énergie prédéterminée a été déchargée du ressort moteur 67. Si par exemple le ressort moteur 67 est enroulé d'un demi-tour lors de l'actionnement du mécanisme, la came de blocage 81 a fait un tour complet lorsque le ressort moteur 67 s'est déroulé d'un demi-tour. Par conséquent, le ressort moteur 67 ne peut pas être trop remonté, et ne peut pas trop se dérouler, sans nécessiter de dispositif de limitation de couple ou similaire. Naturellement, un nombre différent d'encoches 83 pourraient être prévu sur la came de blocage 81, la came de blocage tournant d'une encoche à la suivante pour chaque activation de l'animation.

On note que, bien que le blocage du rouage multiplicateur 77 par l'interaction du bec de blocage 85 et l'encoche 83 soit suffisant pour arrêter le rotor 11, le rouage multiplicateur 77 présente un jeu relativement élevé, ce qui en résulte qu'un positionnement stable du rotor est difficile à réaliser par ce blocage toute seul. C'est pour cette raison que le sautoir 29 est utile pour arrêter et positionner précisément le rotor 11. Si un tel positionnement n'est pas impératif, le sautoir 29 peut être supprimé.

D'autres simplifications du dispositif d'actionnement 23 sont envisageables pour des applications moins exigeantes. Par exemple, l'organe d'actionnement manuel 37 pourrait être en liaison cinématique directe avec le rotor 11, afin qu'une pression sur l'organe d'actionnement manuel entraîne le rotor 11 en rotation, l'inertie du rotor 11 et du régulateur de vitesse 25 assurant que le rotor 11 continue à tourner pendant un certain temps. Cette solution extrêmement simple présenterait avantageusement un mécanisme d'accouplement unidirectionnel, afin que le rotor 11 puisse continuer à tourner une fois l'organe d'actionnement manuel 37 a été relâché. En conséquence, tous les autres composants du dispositif d'actionnement 23, et éventuellement aussi le régulateur de vitesse 25, peuvent être supprimés. Dans ce cas, la source d'énergie est l'utilisateur qui actionne l'organe d'actionnement manuel 37.

Encore alternativement, le rotor 11 peut être entraîné par un moteur électrique, l'organe d'actionnement manuel 37 étant un interrupteur électrique adapté à activer ledit moteur pendant un laps de temps prédéterminé.

Dans une autre variante, la force motrice pour la rotation de rotor 11 peut venir du ressort moteur du mouvement d'horlogerie, par exemple par l'intermédiaire d'un engrenage différentiel agissant comme distributeur de couple. Un exemple de l'application de ce concept à une montre de sonnerie est divulgué dans le document EP 1925995. Les modifications nécessaires au dispositif d'actionnement 23 entraîné par cette variante sont évidentes à l'homme du métier.

Les figures 10 à 12 illustrent une variante particulière d'une pièce d'horlogerie 1 incorporant un mouvement d'horlogerie 3, un dispositif d'affichage 5 entraîné par le mouvement d'horlogerie 3, ainsi qu'un mécanisme de praxinoscope 9 correspondant à celui divulgué dans les figures 2 à 9. Pour raisons de clarté, les éléments du boîtier n'ont pas été représentés ici.

Dans le présent cas, le mouvement d'horlogerie 3 comprend un creux qui loge le mécanisme de praxinoscope 9. Le dispositif d'affichage 5 est agencé de manière coaxiale avec l'axe de rotation du rotor 11, les aiguilles 5a, 5b que comporte le dispositif d'affichage 5 étant disposées sous, et étant visibles à travers, le pont transparent 16 du rotor 11.

Dans le mode de réalisation représenté, le logement 14 que comporte la partie centrale 13 du rotor 11 reçoit un dispositif optique 90 comprenant un assemblage de miroirs concaves montés face à face, similaire à celui décrit dans le document JP 59-075182. À l'intérieur de ce dispositif optique se trouve un objet décoratif 91, tel qu'un bijou, solidaire avec le dispositif optique 90, qui apparaît de manière « flottante » en dessus d'une ouverture centrale 92 dans le miroir supérieur, qui laisse apparaître ledit objet 91. À titre alternatif, l'objet décoratif 91 pourrait être un affichage de type quelconque, lié cinématiquement au mouvement d'horlogerie 3.

## Revendications

1. Pièce d'horlogerie (1) à animation comprenant :
- un mouvement d'horlogerie (3) ;
- un dispositif d'affichage du temps (5) agencé pour être entraîné par le mouvement d'horlogerie (3) ;
- un dispositif d'animation (7) ;
**caractérisée en ce que** le dispositif d'animation (7) comprend un système de praxinoscope (9) comprenant un rotor (11) agencé pour être entraîné en rotation par une source d'énergie (67).

2. Pièce d'horlogerie (1) selon la revendication précédente, dans laquelle le rotor (11) comprend :
- une partie centrale (13) présentant une pluralité de miroirs (15) agencés en cercle et inclinés par rapport à un axe de rotation du rotor (11) ;
- une partie périphérique (17) présentant une pluralité d'images, chaque image étant en face d'un miroir correspondant ;
- un pont (16) reliant la partie centrale (13) à la partie périphérique (17) de telle sorte que la partie centrale (13) et la partie périphérique (17) sont mutuellement solidaires en rotation.

3. Pièce d'horlogerie (1) selon la revendication précédente, dans laquelle ledit pont (16) est transparent, le dispositif d'affichage de temps (5) étant situé de telle sorte qu'il est au moins partiellement visible à travers le pont (16).

4. Pièce d'horlogerie (1) selon l'une des revendications précédentes, dans laquelle ladite source d'énergie (67) est indépendante de celle du mouvement d'horlogerie (5).

5. Pièce d'horlogerie (1) selon l'une des revendications précédentes, dans laquelle le système de praxinoscope (9) comprend un sautoir (29) destiné à coopérer avec une came de positionnement (33) disposée sur le rotor (11) et agencée pour positionner le rotor (11) dans l'une d'une pluralité de positions angulaires prédéterminées lorsque le rotor (11) n'est pas en rotation.

6. Pièce d'horlogerie (1) selon l'une des revendications précédentes, dans laquelle la source d'énergie (67) est un ressort moteur (67) en liaison cinématique avec une denture périphérique (21) que comporte le rotor (11), de préférence par l'intermédiaire d'un rouage multiplicateur (77).

7. Pièce d'horlogerie (1) selon l'une des revendications précédentes, dans laquelle le rotor (11) est adapté pour être entraîné par la source d'énergie (67) suite à une action d'un utilisateur sur un organe d'actionnement manuel (37).

8. Pièce d'horlogerie (1) selon la revendication précédente, dans laquelle le système de praxinoscope (9) comprend un dispositif d'actionnement (23) comprenant :
- une bascule de déclenchement (30) adaptée pour bloquer la rotation du rotor (11) dans une position de blocage de ladite bascule (30) et pour libérer la rotation du rotor (11) dans une position de déclenchement de ladite bascule (30) ;
- un mobile d'actionnement (49) adapté pour être pivoté d'un angle prédéterminé en réponse à ladite action de l'utilisateur, le mobile d'actionnement (49) étant adapté pour emmagasiner une quantité d'énergie prédéterminée dans la source d'énergie (67), le mobile d'actionnement comprenant une came d'actionnement (55) adaptée pour pivoter la bascule de déclenchement (30) entre ladite position de blocage et ladite position de déclenchement lorsque ladite quantité d'énergie prédéterminée a été emmagasinée dans la source d'énergie (67).

9. Pièce d'horlogerie (1) selon les revendications 5 et 8, dans laquelle la bascule de déclenchement (30) est adaptée pour soulever ledit sautoir (29) lorsque ladite bascule de déclenchement (30) se trouve dans ladite position de déclenchement, le sautoir (29) étant de préférence adapté pour exercer une force de rappel sur la bascule de déclenchement (30) tendant à pousser la bascule de déclenchement (30) vers ladite position de blocage.

10. Pièce d'horlogerie (1) selon l'une des revendications 8 et 9, dans laquelle le dispositif d'actionnement (23) comprend en outre une came de blocage (81) en liaison cinématique avec la source d'énergie (67) et le rotor (11), la came de blocage (81) étant adaptée à être bloquée en rotation dans une position prédéterminée par la bascule de déclenchement (30) lorsque la bascule de déclenchement (30) se trouve dans ladite position de blocage.

11. Pièce d'horlogerie (1) selon la revendication précédente, dans laquelle la came de blocage (81) est adaptée pour être rebloquée par la bascule de déclenchement (30) lorsque ladite quantité d'énergie prédéterminée a été consommée.

12. Pièce d'horlogerie (1) selon l'une des revendications 8 à 11, dans laquelle le mobile d'actionnement (49) comprend une came rétractable de sécurité (57), la came rétractable de sécurité (57) étant adaptée pour ne pas empêcher la bascule de déclenchement (30) de passer entre la position de blocage et la position de déclenchement, et pour empêcher la bascule de déclenchement (30) de revenir dans la position de blocage avant que la came de blocage (81) ait tourné d'un angle prédéterminé.

13. Pièce d'horlogerie (1) selon l'une des revendications précédentes, dans laquelle le rotor (1) est pivoté sur un roulement à billes.

14. Pièce d'horlogerie (1) selon l'une des revendications précédentes, dans laquelle la pièce d'horlogerie (1) est une montre bracelet ou une montre de poche.
